# EUROPÄISCHE PATENTANMELDUNG

(11) **EP 0 801 225 A1**
(43) Veröffentlichungstag der Anmeldung: **15.10.1997**
(21) Anmeldenummer: 97103858.3
(22) Anmeldetag: 07.03.1997
(51) Int. Cl.: F02N 17/08, C10L 3/00

(54) **Zündfluid**

(30) Priorität: 09.04.1996 AT 635/96
(71) Anmelder: JENBACHER ENERGIESYSTEME AG, A-6200 Jenbach (AT)
(72) Erfinder: Günther, Herdin, 6200 Jenbach (AT)
(74) Vertreter: Hofinger, Engelbert, DDr.

(57) **Zusammenfassung**

Zündfluid, welches zur Zündung des Kraftstoff-Luft-Gemisches in einen Ottomotor, insbesondere Gasottomotor, eingespritzt wird, wobei das Zündfluid Dimethylether (DME) enthält.

## Beschreibung

Die Erfindung betrifft ein Zündfluid, welches zur Zündung des Kraftstoff-Luft-Gemisches in einen Ottomotor, insbesondere Gasottomotor, eingespritzt wird.

Eine mit dem Hauptbrennraum kommunizierende Vorkammer mit elektrischer Zündung dient zur Verstärkung der Zündenergie bei Ottomotoren im allgemeinen und bei Gasottomotoren im speziellen. Vorkammern in Gasottomotoren werden ab einem bestimmten Zylinderdurchmesser allgemein eingesetzt. Vorteil ist das stabile Verbrennungsverhalten, Nachteil ist der teilweise extrem große Kerzenverschleiß aufgrund hoher Temperaturen.

Bei steigenden spezifischen Motorleistungen nehmen die erwähnten Nachteile der elektrischen Zündung in der Vorkammer zu. Eine alternative Lösung besteht in der Einspritzung einer kleinen Menge Diesel als Zündfluid (z.B. DE 44 04 899). Um die Entflammung zu gewährleisten, muß die Einspritzung in eine Vorkammer erfolgen, in der zusätzlich eine Glühkerze als Zündhilfe angebracht ist. Nachteilig ist hiebei die relativ schlechte Entflammbarkeit von Diesel in einem Gas-Luftgemisch sowie die Notwendigkeit einer Zündhilfe in Form einer Glühkerze.

Die DE 44 19 429 A1 zeigt einen Motor mit Vorkammer, in die Hochdruckgas eingeblasen wird. Damit soll der Nachteil der Notwendigkeit von Diesel als Zündfluid vermieden werden. Man hat damit allerdings den weiteren Nachteil des sehr hohen Energiebedarfes für die Gasverdichtung und die noch schlechteren Selbstzündeigenschaften von Gas anstelle von Dieselkraftstoff zu tragen.

Aufgabe der Erfindung ist es, einen mittels eines Zündfluids gezündeten Ottomotor zu schaffen, der sich durch einfachen Aufbau und hohe Standfestigkeit auszeichnet.

Dies wird erfindungsgemäß dadurch erreicht, daß das Zündfluid Dimethylether (DME) enthält.

Kern der Erfindung ist also die Verwendung von Dimethylether (DME) als Zündfluid zur Zündung von Gasottomotoren. Hiebei kann sowohl eine Ausführung mit Einspritzung in eine Vorkammer gewählt werden, hier allerdings ohne die Notwendigkeit einer Glühkerze, als auch eine direkte Einspritzung in den Hauptbrennraum des Gasottomotors. Wegen der guten Zündfähigkeit ist der Anspruch auf gute Zerstäubung nicht so hoch wie bei der Dieseleinspritzung, sodaß einfachere Einspritzsysteme mit niedrigerem Druckniveau verwendet werden können. Weiterhin sind aus demselben Grund die einzuspritzenden Mengen für eine sichere Zündung des Gas-Luftgemisches tendenziell geringer als bei Dieselkraftstoff.

Als Einspritzsysteme eignen sich beispielsweise: Pumpe-Leitungs-Düse-System mit Recheneinspritzpumpe (elektronisch gesteuert); Verteilereinspritzpumpensystem; Pumpe-Düseelemente oder eine Druckstoßeinspritzung.

Bisher ist nur bekannt, daß DME als alleiniger Treibstoff in Dieselmotoren verbrannt wird. Eine Verwendung von DME als Zündfluid war dabei nicht vorgesehen.

Die Erfindung wird anhand der nachstehenden Figuren näher erläutert.

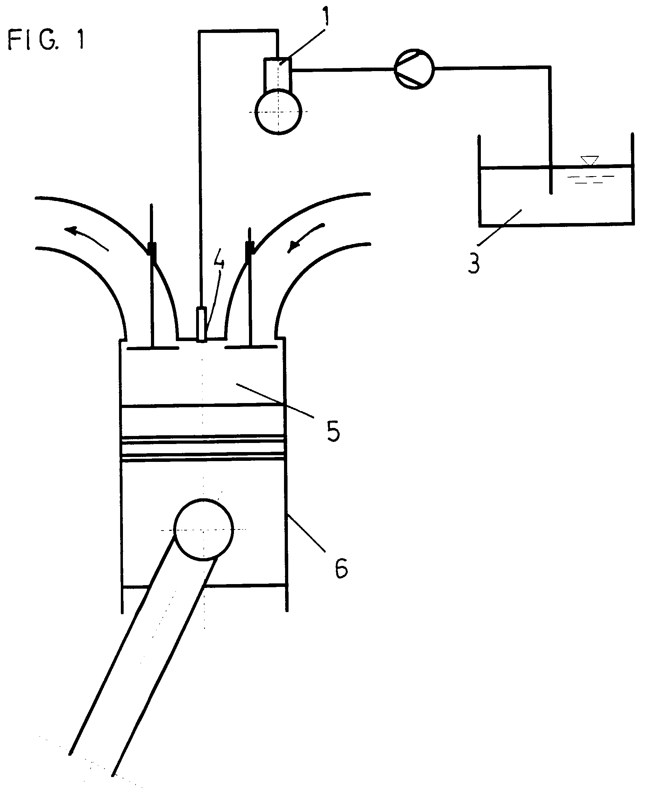

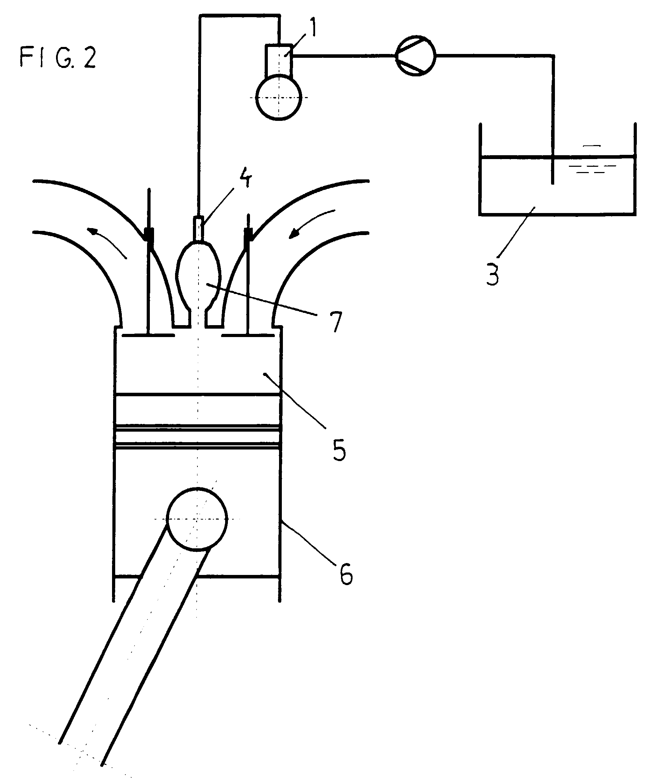

Fig. 1 zeigt ein erstes Ausführungsbeispiel eines Zylinders eines Gasottomotors mit Zündfluideinspritzung in den Hauptbrennraum. Fig. 2 zeigt ein zweites Ausführungsbeispiel mit Zündfluideinspritzung in eine Vorkammer.

Zur Verwirklichung der Einspritzung von DME als Zündfluid in den Gasottomotor wird gemäß Fig. 1 DME mit einer Einspritzpumpe 1 bekannter Technologie aus dem Vorratstank 3 über eine Einspritzdüse 4 zum gewünschten Zündzeitpunkt vorzugsweise direkt in den Hauptbrennraum 5 des Gasottomotors eingespritzt. Der vorzugsweise zwischen 170 und 1000 bar eingespritzte DME verbrennt unter dem Einfluß der der Verdichtung im Zylinder 6 entsprechenden hohen Temperatur im Zylinder ohne weitere Zündhilfe und setzt dadurch das im Brennraum befindliche magere Gas-Luft-Gemisch in Brand. Die Einspritzmenge beträgt vorteilhaft 0,5% bis 5% des dem Motor zugeführten Gesamtenergiegehaltes

Es ist in einer weiteren Ausführung (Fig. 2) jedoch auch möglich, den DME in eine Vorkammer 7 einzuspritzen, wobei die Vorkammer 7 keine Zündhilfe und keine zusätzliche Gaszufuhr von außerhalb des Hauptbrennraumes 5 benötigt. Letztere Lösung wird vor allem dann eingesetzt werden, wenn ein bestehender Motor auf den Betrieb mit DME als Zündfluid umgestellt werden soll.

## Patentansprüche

1. Zündfluid, welches zur Zündung des Kraftstoff-Luft-Gemisches in einen Ottomotor, insbesondere Gasottomotor, eingespritzt wird, dadurch gekennzeichnet, daß das Zündfluid Dimethylether (DME) enthält.

2. Zündfluid nach Anspruch 1, dadurch gekennzeichnet, daß es ausschließlich aus Dimethylether (DME) besteht.

3. Ottomotor zur Verwendung des Zündfluids nach Anspruch 1 oder 2, gekennzeichnet durch einen Dimethylether-Vorratstank (3), aus dem Dimethylether über eine Einspritzpumpe (1) und eine Einspritzdüse (4) direkt in den Hauptbrennraum (5) eingespritzt wird.

4. Ottomotor zur Verwendung des Zündfluids nach Anspruch 1 oder 2, gekennzeichnet durch einen Dimethylether-Vorratstank (3), aus dem Dimethylether über eine Einspritzpumpe (1) und eine Einspritzdüse (4) in eine mit dem Hauptbrennraum (5) in Verbindung stehende Vorkammer (7) eingespritzt wird.

5. Ottomotor nach Anspruch 3 oder 4, dadurch gekennzeichnet, daß der Einspritzdruck zwischen 170 und 1000 bar liegt.

6. Ottomotor nach einem der Ansprüche 3 bis 5, dadurch gekenn-zeichnet, daß die Einspritzmenge an Zündfluid zwischen 0,5 % und 5 % bezogen auf den dem Motor zugeführten Gesamtenergiegehalt beträgt.
